# FASCICULE DE BREVET EUROPEEN

(11) **EP 2 906 422 B1**
(45) Date de publication et mention de la délivrance du brevet: **25.05.2016**
(21) Numéro de dépôt: 13789849.0
(22) Date de dépôt: 08.10.2013
(51) Int. Cl.: B32B 17/10

(54) **FABRICATION D'UN VITRAGE FEUILLETE MUNI D'UN CONDUCTEUR ELECTRIQUE**
HERSTELLUNG EINER VERBUNDVERGLASUNG MIT EINEM ELEKTRISCHEN LEITER
PRODUCTION OF LAMINATED GLAZING PROVIDED WITH AN ELECTRICAL CONDUCTOR

(30) Priorité: 12.10.2012 FR 1259744
(43) Date de publication de la demande: 19.08.2015
(73) Titulaire: Saint-Gobain Glass France, 92400 Courbevoie (FR)
(72) Inventeur: HENNION, Alexandre, F-60280 Venette (FR); FREBOURG, Philippe, F-60300 Senlis (FR)
(74) Mandataire: Colombier, Christian
(86) Numéro de dépôt international: PCT/FR2013/052383
(87) Numéro de publication internationale: WO 2014/057200

(56) Documents cités:
- EP-A2- 1 710 104
- DE-A1- 4 324 847
- DE-B1- 2 332 915
- FR-A5- 2 101 618

## Description

L'invention concerne un procédé de fabrication d'un vitrage feuilleté comprenant un conducteur électrique entre deux de ses feuilles de verre et comprenant la découpe d'un orifice ou d'une encoche d'une de ses feuilles de verre pour le passage du conducteur.

Un vitrage feuilleté comprend deux feuilles de verre (c'est-à-dire au moins deux feuilles de verre) et une feuille intercalaire en matériau polymère placée entre les deux feuilles de verre.

Selon l'état de la technique, les éléments nécessitant une connexion électrique (que ce soit pour assurer une fonction d'alimentation en énergie ou de communication) et rapportés sur la face intérieure du vitrage doivent être reliés aux faisceaux du véhicule par un câble disposé le long de la face intérieure du vitrage. Les solutions existantes pour cacher et protéger les câbles d'alimentation et de communication, bien connues dans le cas des pare-brise au niveau du rétroviseur (capteur de pluie, de luminosité, caméras...) consistent à:
- mettre un aplat d'émail noir en recouvrement de la zone en face 2 ou 4 du vitrage feuilleté pour protéger la vue depuis l'extérieur du véhicule ;
- installer un boîtier et une goulotte en plastique pour recouvrir le dispositif électrique ainsi que les conducteurs électriques à l'intérieur du véhicule.

Rappelons que l'on numérote habituellement les surfaces des feuilles de verre d'un vitrage feuilleté comprenant deux feuilles de verre de 1 à 4 en partant de la surface externe du vitrage destinée à être tournée vers l'extérieur du véhicule et en finissant par la surface externe du vitrage destinée à être tournée vers l'intérieur du véhicule.

L'aspect des vitrages automobile actuels est fortement affecté dès que les éléments actifs doivent être positionnés à l'intérieur du vitrage. En effet, si l'habillage des dispositifs électriques est acceptable lorsqu'ils sont cachés par le rétroviseur intérieur, ils deviennent problématiques aux autres endroits. En effet, les caches et goulottes sont relativement volumineux et masquent une partie de la zone de vision du vitrage; de plus, ils sont en plastique et en saillie et donnent un aspect peu valorisant à l'ensemble. La suppression de la goulotte en plastique ainsi que de tout objet encombrant la vue de l'intérieur du véhicule permettrait d'acquérir un niveau esthétique plus élevé correspondant plus aux exigences des constructeurs automobile.

On a maintenant eu l'idée d'utiliser un vitrage feuilleté pour acheminer un conducteur électrique d'un endroit à l'autre du véhicule sans nécessité d'utiliser une goulotte nécessairement en saillie à l'intérieur du véhicule. Les vitrages feuilletés considérés dans la présente demande font le plus souvent office de pare-brise ou de toit de véhicule automobile mais peuvent également être montés en lunette arrière ou vitre latérale de véhicule automobile. Le conducteur électrique passe entre deux feuilles de verre et il est soit à l'intérieur de l'intercalaire en matériau polymère soit entre cet intercalaire et l'une des feuilles de verre du vitrage feuilleté. Le conducteur rentre dans le vitrage feuilleté par un premier endroit et en ressort par un deuxième endroit, l'un au moins de ces endroits correspondant à une zone évidée du type trou ou encoche réalisée dans une feuille du vitrage feuilleté. Généralement, une feuille du vitrage feuilleté réalisé selon l'invention comprend un trou. L'invention est plus particulièrement destinée à la réalisation d'un vitrage feuilleté dont une première feuille comprend un trou pour le passage d'une première extrémité d'un conducteur électrique, la deuxième feuille ne comprenant aucune zone évidée vis-à-vis du trou de la première feuille. Dans ce cas, la deuxième extrémité du conducteur électrique ressort généralement du vitrage feuilleté par le bord extérieur du vitrage feuilleté, une encoche pouvant éventuellement être réalisée à cet endroit pour faciliter le passage de cette seconde extrémité. Cette encoche est généralement réalisée dans la même feuille que celle comprenant le trou, la seconde feuille pouvant alors ne comprendre aucune zone évidée. Le trou est réalisé selon l'invention (application d'un refroidissement contrôlé local) alors que l'encoche peut être réalisée selon l'invention ou non.

Selon le procédé de l'invention, la zone évidée est réalisée sur l'une des feuilles avant assemblage. La zone évidée présente bien une contrainte de compression de bord renforçant ceux-ci sur le plan mécanique. Une zone évidée peut également être réalisée sur des zones en vis-à-vis des deux feuilles de verre du vitrage feuilleté.

Lors de leur utilisation, les vitrages sont soumis à des sollicitations thermiques ou mécaniques, en particulier lors de leur manipulation, auxquelles ils doivent résister pour éviter leur casse. Par exemple, les pare-brise d'un véhicule subissent des efforts mécaniques en leur périphérie lors de leur montage sur une carrosserie, que ce soit manuellement ou via un robot. Outre les contraintes mécaniques, le vitrage est soumis à des contraintes d'origine thermique lors des cycles de dégivrage du pare-brise. Ces sollicitations d'origine thermique ou mécanique, occasionnent des risques de casse notamment sur les bords du vitrage. Afin de garantir une bonne résistance mécanique du vitrage, des contraintes de bords en compression sont générées lors de la fabrication du vitrage. Ces contraintes de bords sont connues et spécifiées dans le cahier des charges des constructeurs automobile. Outre les bords extérieurs d'un vitrage présentant des contraintes de compression, des contraintes de compression sont de préférence également générées en pourtour de parties évidées. Le renforcement du bord de la partie évidée rend cette zone plus résistante aux chocs ainsi qu'aux manipulations et permet en outre de l'utiliser pour la fixation d'un accessoire (antenne, etc).

La demande de brevet français n°1159322 enseigne un procédé de fabrication d'un vitrage feuilleté comprenant au moins deux feuilles de verre et au moins une couche intercalaire en matériau polymère agencée entre les feuilles, le procédé comprenant le bombage des feuilles, le refroidissement contrôlé des feuilles, l'assemblage des feuilles de verre et de la couche intercalaire, ledit procédé comprenant les étapes suivantes dans l'ordre suivant:
- bombage des feuilles de verre,
- refroidissement contrôlé des feuilles de verre,
- formation d'un assemblage feuilleté comprenant les feuilles de verre et la couche intercalaire,
- découpe de l'assemblage feuilleté dans toute son épaisseur selon une ligne sur une de ses faces principales,
le refroidissement contrôlé comprenant un refroidissement contrôlé général et un refroidissement contrôlé local d'une zone comprenant la ligne de découpe, le refroidissement contrôlé local étant plus rapide que le refroidissement contrôlé général. Le refroidissement contrôlé local produit des contraintes de bord le long de la ligne de découpe.

Les feuilles de verre utilisés dans le cadre de la présente invention peuvent être recouvertes ou non d'une ou plusieurs couches minces (comme anti-reflet, antisolaire, anti-abrasion, etc).

Une feuille de verre comprend deux faces principales ; il en est de même pour un assemblage feuilleté. L'expression « assemblage feuilleté » peut désigner le vitrage feuilleté final.

Dans le cadre de la présente invention, un conducteur électrique est en contact intime avec l'intercalaire en matériau polymère et passe au travers d'une zone évidée qui est un trou ou une encoche. La présence de contraintes de compression de bord au pourtour du trou ou de l'encoche est particulièrement importante dans ce contexte. En effet, le conducteur électrique intégré à ou contre la feuille intercalaire en matériau polymère augmente légèrement et localement le volume de matière confiné entre les deux feuilles de verre. Ces dernières vont donc légèrement se déformer lors de la fabrication du produit, plus particulièrement lorsque l'air résiduel est retiré d'entre les feuilles de verres et la feuille intercalaire durant la phase dite « d'assemblage » du vitrage feuilleté. Cette légère déformation locale des deux feuilles de verre au voisinage du conducteur pourra être atténuée lors des étapes de fabrication où le vitrage est chauffé (comme lors du passage à l'autoclave), le polymère se ramollissant alors et étant susceptible de fluer. Néanmoins, il reste toujours une déformation résiduelle des deux feuilles qui génère des contraintes de déformations locales le long du conducteur électrique et plus spécifiquement au niveau des bords de l'orifice ou de l'encoche où ce conducteur ressort d'entre les feuilles de verre. Les contraintes résiduelles de compression au bord de cet orifice ou encoche doivent donc être suffisantes pour résister aux contraintes mécaniques ou thermomécaniques de chargement externe décrites plus haut mais aussi aux contraintes induites par les déformations permanentes des deux feuilles de verre dues à la présence du conducteur.

Les contraintes dans les produits verriers sont générées lorsque le verre est chauffé à une température à partir de laquelle il perd son comportement élastique pur et devient légèrement plastique, du type liquide viscoélastique. Lors du refroidissement et en fonction de l'inhomogénéité thermique initiale de l'échantillon et/ou de l'hétérogénéité du refroidissement lui-même, certaines zones se figent avant d'autres. A cause de la dilatation thermique, des contraintes permanentes de compression et d'extension apparaissent au sein de l'échantillon lors de son refroidissement. Qualitativement, les parties où le verre s'est figé en premier lieu correspondent aux parties où se concentrent les contraintes de compression alors que les parties où le verre s'est figé avec retard concentrent les zones de contraintes en extension. Les contraintes de bord décrites dans la présente demande sont des contraintes de membrane qui peuvent se définir en tout point M du matériau et pour une direction donnée, comme la moyenne du champ contrainte en ce point et selon cette direction, la moyenne étant effectuée dans toute l'épaisseur de l'échantillon. En bord d'échantillon, seule la composante de contraintes de membrane parallèle au bord est appropriée ; la composante perpendiculaire a une valeur nulle. Aussi toute méthode de mesure permettant une mesure des contraintes moyennes le long d'un bord et à travers l'épaisseur de l'échantillon est pertinente. Les méthodes de mesure des contraintes de bord utilisent les techniques de photoélasticimétrie. Les deux méthodes décrites dans des normes ASTM citées ci-dessous permettent de mesurer les valeurs de contraintes de bord :
- la méthode utilisant le compensateur de Babinet et décrite dans la norme ASTM C1279 - 2009 - 01, procédure B;
- les mesures effectuées avec des appareils du commerce comme le Sharples modèle S-67 commercialisé par la société Sharples Stress Engineers, Preston, UK et utilisant un compensateur dit de Sénarmont ou Jessop-Friedel. Le principe de la mesure est décrit dans la norme ASTM F218 - 2005 - 01 ;

Dans le cadre de la présente demande, les valeurs de contraintes en compression sont déterminées par la méthode décrite dans la norme ASTM F218-2005-01.

Généralement les valeurs de contrainte en compression sont déterminées entre 0,1 et 2 mm d'un bord et de préférence entre 0,5 et 1 mm d'un bord.

Selon l'invention, les différentes feuilles de verre devant être assemblées pour former un vitrage feuilleté sont bombées ensemble à l'état appariées (c'est-à-dire formant une paire de sorte qu'une surface principale d'une feuille est en contact avec une surface principale de l'autre feuille, les deux feuilles étant généralement superposées l'une sur l'autre pour former un empilement), de façon à ce qu'elles prennent bien toute deux les mêmes courbures lors du bombage thermique. Le fait de bomber simultanément à l'état apparié les deux feuilles destinées à être assemblées présente l'avantage de ce que les différentes feuilles de verre peuvent être d'épaisseur et de teinte éventuellement différents. En effet, les deux feuilles vont bien prendre les mêmes courbures malgré leurs différences.

Selon l'invention, le perçage créant la zone évidée peut être réalisé avant bombage ou après bombage sur l'une des feuilles de verre ou sur les deux. La qualité optique du vitrage final est généralement meilleure lorsque le perçage est réalisé après bombage, car ce dernier n'a pas été influencé par la zone évidée à proximité de celle-ci. Pour le cas où le perçage est réalisé sur les deux feuilles de verre, il peut être réalisé de sorte que les zones évidées des feuilles de verre soient en vis-à-vis ou non en vis-à-vis dans le vitrage feuilleté. Le choix de l'endroit de perçage dépend de la finalité visée.

L'invention concerne un procédé de fabrication d'un vitrage feuilleté bombé comprenant deux feuilles de verre, une couche intercalaire en matériau polymère agencée entre les feuilles de verre, et un conducteur électrique, ledit procédé comprenant le bombage thermique simultané des feuilles de verre à l'état apparié suivi de leur refroidissement puis de l'assemblage du vitrage feuilleté par collage des feuilles de verre à la couche intercalaire de part et d'autre de celle-ci, ledit refroidissement comprenant un refroidissement contrôlé des feuilles de verre à l'état apparié, le refroidissement contrôlé comprenant un refroidissement contrôlé général et un refroidissement contrôlé local d'une zone de découpe, le refroidissement contrôlé local étant plus rapide que le refroidissement contrôlé général, une découpe de l'une des feuilles de verre selon une ligne de découpe dans la zone de découpe pour former une zone évidée, le conducteur électrique étant placé entre les feuilles de verre et sortant du vitrage feuilleté par la zone évidée.

Le matériau polymère est généralement un polyvinyle de butyral plus généralement appelé PVB par l'homme du métier.

L'invention a notamment pour but de proposer un procédé de fabrication d'un vitrage feuilleté dont au moins une de ses feuilles de verre, voire les deux feuilles de verre, est doté dans toute son épaisseur d'un bord découpé selon une ligne de découpe, avant assemblage des feuilles de verre en feuilleté, ledit bord présentant des contraintes de compression de bord. Le bord découpé selon la ligne de découpe détermine la zone évidée et a la forme d'un orifice ou d'une encoche dans le bord extérieur du vitrage. Le procédé selon l'invention garantit des contraintes de compression du bord découpé selon une intensité homogène et suffisante le long de ce bord. Dans le cas d'une encoche, le procédé selon l'invention est de préférence appliqué à une encoche ayant une profondeur d'au moins 0,5 cm dans le bord d'une feuille de verre vers l'intérieur de ladite feuille de verre. Généralement, l'encoche est réalisée dans une seule des feuilles de verre, sans zone évidée dans l'autre feuille de verre au même endroit (vis-à-vis de l'encoche).

Selon l'invention, une partie évidée dans une feuille de verre est un trou ou une encoche traversant l'intégralité de son épaisseur. Un trou (synonyme de orifice) présente un contour fermé sur lui-même entièrement à l'intérieur des faces principales de la feuille de verre découpée. Une encoche constitue une discontinuité du bord externe de la feuille de verre pour former une partie évidée vers l'intérieur des faces principales de la feuille de verre. C'est en quelque sorte un trou ouvert dans le bord de la feuille de verre. Dans le cadre de l'invention, toute zone évidée d'une feuille de verre est traversante c'est-à-dire traverse toute l'épaisseur de ladite feuille de verre.

La zone évidée, notamment un orifice, peut être réalisée dans une première feuille de verre, alors qu'aucune zone évidée n'est réalisée dans la deuxième feuille de verre vis-à-vis de la zone évidée de la première feuille de verre (lorsque les deux feuilles de verre sont assemblées pour former le vitrage feuilleté). Dans ce cas, la couche intercalaire est de préférence non-découpée vis-à-vis de la zone évidée de la première feuille de verre, sauf le cas échéant selon un contour correspondant à celui du conducteur électrique devant passer à travers elle.

Un orifice dans une feuille de verre pour le passage du conducteur électrique peut avoir un diamètre compris entre 3 et 80 mm.

Dans le cadre de la présente demande, on distingue les deux types de refroidissements suivants appliqués aux feuilles de verre lorsqu'elles sont à l'état juxtaposés:
a) le « refroidissement contrôlé général » qui permet de générer des contraintes en compression sur les bords externes des feuilles afin d'obtenir une résistance mécanique suffisante au niveau de ces bords. Ce refroidissement est exercé globalement à l'ensemble du vitrage ; ce type de refroidissement global est bien connu de l'homme du métier ;
b) selon l'invention, un « refroidissement contrôlé local » est exercé, afin de générer des contraintes en compressions sur les bords de la ligne déjà découpée ou qui sera découpée. Ce refroidissement contrôlé local est plus rapide que le refroidissement général.

Ainsi, le procédé de l'invention procure divers avantages notamment :
- bonne compatibilité de forme entre les deux feuilles de verre du fait de leur bombage simultané à l'état apparié, ce qui garantit une meilleure qualité d'assemblage,
- existence de contraintes de compression sur les bords créés par la découpe du fait du refroidissement contrôlé local plus intense sur la zone recouvrant la ligne prévue pour la découpe ;

Le refroidissement contrôlé local constitue un refroidissement inhomogène des faces principales. Il peut être appliqué sur une seule ou les deux surfaces principales de l'empilement des feuilles appariées soumises au refroidissement.

Le refroidissement contrôlé local de la zone de découpe (comprenant la ligne de découpe) est plus rapide que le refroidissement contrôlé général des feuilles. Le refroidissement local est appliqué au niveau de la ligne de découpe, avant ou après la découpe elle-même. Cette zone de refroidissement local recouvre toute la ligne de découpe généralement d'au moins 1 mm de part et d'autre de cette ligne. Le refroidissement local peut être élargit à une zone voisine qui ne subira pas nécessairement directement l'outil de découpe. A titre d'exemple, si l'on souhaite réaliser un trou de quelques centimètres de diamètre dans une feuille de verre après avoir réalisé le refroidissement local, on peut réaliser le refroidissement local sur toute la surface correspondant au trou (en fait de façon un peu plus étendue que le trou), alors que la découpe ne sera exercée que selon le contour du trou. Dans le cas d'un trou de relativement grande dimension (trou dans lequel un cylindre de 50 mm de diamètre pourrait passer), il est préférable d'exercer le refroidissement contrôlé local seulement sur la ligne destinée à être découpée ou déjà découpée. Il est en effet inutile d'exercer ce refroidissement contrôlé local sur toute la surface évidée ou destinée à être évidée, si celle-ci est grande.

Le refroidissement contrôlé local est obtenu par convection, conduction, rayonnement, ou une combinaison de ces moyens.

Le refroidissement contrôlé général est exercé directement après le bombage. Généralement, le refroidissement contrôlé local est exercé entre le début et la fin du refroidissement général. Cependant, il n'est pas exclu de commencer le refroidissement local vers la fin du bombage alors que le refroidissement général n'a pas commencé. Ainsi, le refroidissement contrôlé local est généralement exercé dans une chambre de refroidissement de préférence au début du refroidissement général du vitrage dans la chambre de refroidissement. En variante, il peut être commencé en fin de chambre de bombage.

Une chambre de refroidissement contrôlé exerce le refroidissement contrôlé général. Si le refroidissement contrôlé local y est aussi exercé, cette chambre est de plus équipée des moyens nécessaires à l'application de ce refroidissement contrôlé local. Ce moyen peut par exemple être une buse venant souffler localement sur une face des feuilles de verre appariées. Il peut aussi s'agir d'un élément métallique froid (refroidi intérieurement par de l'air par exemple) venant en contact avec la zone locale à refroidir plus rapidement.

Avantageusement, le bombage et le refroidissement sont tous deux réalisés sur les deux feuilles de verre agencées de façon appariées. Notamment, les deux feuilles appariées peuvent circuler dans au moins une chambre de bombage puis dans au moins une chambre de refroidissement contrôlé, le refroidissement contrôlé localisé débutant éventuellement dans la dernière chambre de bombage ou dans une chambre de refroidissement contrôlé.

Le bombage des feuilles de verre peut notamment être réalisé par pressage et/ou aspiration à la température de bombage, comme enseigné par les WO02064519, WO2006072721, WO2004/087590. Ce bombage est réalisé sur les feuilles de verre devant être ensuite assemblées, de façon appariées. Notamment, les deux feuilles de verre appariées peuvent circuler dans des chambres de prébombage par gravité, puis dans une chambre de pressage et/ou aspiration et enfin dans des chambres de refroidissement contrôlé, le refroidissement contrôlé local débutant éventuellement en fin de bombage ou dans les chambres de refroidissement. Le refroidissement contrôlé commence à une température supérieure à 580°C (généralement entre 650 et 580°C) et se poursuit au moins jusqu'à ce que la température baisse à 520°C, voire en-dessous de cette température. Il est réalisé dans les chambres de refroidissement, en commençant éventuellement préalablement dans la dernière chambre de bombage.

Le bombage des feuilles de verre appariées est réalisé sans matière organique entre elles compte tenu de la température nécessaire au bombage thermique. Le bombage thermique est réalisé avant assemblage avec l'intercalaire en matériau polymère puisque ce dernier commence à se dégrader à partir de 160°C avec formation de bulles. Si l'on refroidissait à partir d'une telle basse température, il serait par ailleurs impossible de générer des contraintes permanentes de compression de bord dans le verre.

Le bombage n'est pas nécessairement exercé dans une chambre, les outils de bombage pouvant être à l'air libre.

De même, les refroidissements contrôlés général et local ne sont pas nécessairement exercés dans une chambre.

De préférence, le début du refroidissement contrôlé général est contrôlé avec une vitesse comprise dans le domaine de 0,3 à 8°C/seconde, et de manière encore préférée de 0,3 à 2°C/seconde, au moins jusqu'à ce que la température du verre (entre 650 et 580°C en sortie du bombage) atteigne 520°C. Il s'agit donc de réaliser ce refroidissement contrôlé au moins entre 580 et 520°C.

Le refroidissement contrôlé local est exercé d'un seul côté en regard de l'une des faces des deux feuilles de verre appariées, ou bien des deux côtés opposés des deux feuilles de verre appariées et en vis-à-vis. Si le refroidissement contrôlé local est appliqué contre la surface d'une seule feuille de verre, il produit ses effets dans toute l'épaisseur des deux feuilles de verre appariées, dans la mesure où l'épaisseur des feuilles appariées n'est pas trop importante, bien entendu, et que le refroidissement local soit de durée et d'intensité suffisante. Le refroidissement local contrôlé peut être exercé d'un seul côté de l'empilement des feuilles à condition de garantir un refroidissement local contrôlé plus rapide, dans toute l'épaisseur, que le refroidissement contrôlé général. Il peut aussi être exercé des deux côtés en vis-à-vis.

Le refroidissement contrôlé local de la zone de découpe, appliqué sur la ligne de découpe (avant ou après découpe), est suffisant en durée et en intensité pour que les contraintes de bord de la zone évidée après découpe soient supérieures à 4 MPa et de préférence supérieures à 8 MPa. Des tests de routine permettent aisément cette mise au point.

Le refroidissement contrôlé général du vitrage peut de manière connue utiliser un transfert thermique tel que la convection, rayonnement, conduction, ou une combinaison de ces trois modes de transfert de chaleur.

Dans la présente demande, on peut appeler « zone en compression » ou « zone de compression » la zone ayant subi le refroidissement contrôlé local.

Le refroidissement différencié et localisé des feuilles de verre pour obtenir les zones de compression peut être réalisé par tous moyens, par exemple par convection, ou rayonnement, ou encore conduction, ou bien une combinaison de ces moyens. Ce refroidissement différencié local consiste à refroidir plus rapidement sur la ligne découpée ou destinée à être découpée.

La convection consiste à souffler de l'air froid (air à température inférieure à celle du verre, typiquement inférieure à 450 °C, et généralement à température ambiante) dirigé sur les zones que l'on veut mettre en compression. Suivant la vitesse de refroidissement moyenne du vitrage, seront ajustées la température de l'air injecté et/ou l'intensité du soufflage. Ainsi, le refroidissement contrôlé local peut-être réalisé par soufflage local d'air plus froid que l'air ambiant entourant les feuilles de verre à l'état apparié.

La conduction vise à mettre en contact les parties du verre que l'on veut refroidir plus rapidement, avec un matériau plus froid que la surface du verre.

Concernant le rayonnement, on peut utiliser un matériau plus froid que l'on vient placer en regard avec le verre. L'échange thermique par rayonnement va permettre un refroidissement local plus important de la zone en vis-à-vis du matériau.

Le refroidissement différencié et localisé des feuilles de verre pour obtenir les zones de compression peut également passer par l'utilisation de caches qui limitent la vitesse de refroidissement en dehors des zones où l'on veut établir des contraintes en compression. En dehors des caches sont ainsi créées des zones, qui correspondront aux zones de compression, pour lesquelles le refroidissement du verre est plus important. Un exemple de cache est un matériau isolant, en particulier fibreux, de surface équivalente à celle du vitrage et dans lequel sont pratiquées des ouvertures. Le matériau est placé proche du verre chaud lors de sa phase de refroidissement. Placé dans une ambiance froide, les parties du vitrage se trouvant en regard des ouvertures se refroidissent plus rapidement que celles qui sont cachées.

On peut utiliser par conséquent des matériaux de revêtement qui augmentent ou diminuent l'émissivité du verre en surface.

On peut utiliser un revêtement plus émissif que la surface du verre et le mettre contre des zones de compression souhaitées, ces zones se refroidiront alors plus vite.

A l'inverse de l'exemple ci-dessus, on peut utiliser un revêtement moins émissif que la surface du verre et le mettre contre la surface du verre en dehors des zones de compression souhaitées, ces zones se refroidiront alors plus lentement que les zones à mettre en compression.

Comme matériaux qui augmentent ou diminuent l'émissivité du verre en surface, on peut utiliser des matériaux permettant de revêtir facilement la surface du verre. Dans ce cas, ils sont de préférence non toxiques, résistants à la température, et sont facilement dispersibles ou solubles dans l'eau.

Le début du refroidissement général est contrôlé préférentiellement entre 0,3 et 2°C par seconde depuis la température de fin de bombage, entre 580°C et 650°C, en sortie de bombage jusqu'à ce que la température du verre atteigne 520°C, voire plus bas. En dessous de 520°C, on peut exercer un refroidissement convectif de l'ensemble du vitrage afin d'accélérer le processus. En dessous de 480°C, il est inutile de continuer à exercer le refroidissement contrôlé local, l'intégralité du vitrage pouvant alors subir le même refroidissement général. Le verre sort d'une éventuelle chambre de refroidissement en général à moins de 300°C.

A titre d'exemple, le refroidissement contrôlé local est exercé au moyen d'une buse de soufflage d'air dont une extrémité présente une section de forme adaptée pour souffler sur la ligne à découper, et est apposée contre au moins une des feuilles de verre au niveau de la ligne à découper. Par exemple, si la ligne à découper a la forme d'un cercle, l'orifice de la buse peut avoir la forme d'un disque ou d'une couronne. Dans le cas d'un disque, le diamètre du disque est légèrement supérieur à celui du cercle à découper et c'est toute la surface à l'intérieur du cercle qui subira le refroidissement contrôlé local. Dans le cas d'une buse en couronne, on souffle sur une zone en couronne sur le cercle et pas à l'intérieur de cette couronne.

En variante ou de manière combinée, le refroidissement contrôlé local est obtenu par l'application contre ou au voisinage de la surface du verre d'un matériau de revêtement provisoire notamment du type tissu augmentant ou diminuant le rayonnement thermique vers ou émis par le verre, et pourvu d'au moins une ouverture, cette ouverture correspondant à la zone comprenant la ligne de découpe ou bien à la partie restante du vitrage (zone ne comprenant pas la ligne de découpe) selon le type du matériau. Dans ce cas, le refroidissement différencié (refroidissement local plus intense sur la ligne de découpe que le refroidissement général à côté de la ligne de découpe) est ici obtenu en jouant sur la différence de rayonnement thermique émis par le verre en conséquence de l'application du matériau de revêtement provisoire.

En variante ou de manière combinée, le refroidissement contrôlé local est obtenu par l'application contre la surface du verre d'un matériau de contact à la température inférieure à celle du verre, les zones en contact comprenant la ligne de découpe. Il peut s'agir d'un élément en métal froid comme en acier recouvert d'un tissu métallique pour éviter les chocs thermiques. Cet élément en métal froid peut être parcouru par un fluide de refroidissement (air ou eau) pour le maintenir froid. Le refroidissement différencié (refroidissement local plus rapide que le refroidissement général à côté de la zone à découper) est ici obtenu en jouant sur la différence de transfert thermique par conduction émis par le verre en conséquence de l'application du matériau de contact.

En plus du conducteur électrique, la zone évidée peut être destinée à accueillir une pièce fonctionnelle (comme une antenne, un feu stop, une caméra, etc...) fixée à l'une ou aux deux feuilles de verre assemblées.

Le vitrage feuilleté peut être façonné en bord de la découpe de la zone évidée, par exemple chanfreiné sur au moins l'une des feuilles, ou sur les deux feuilles.

L'étape de découpe est obtenue par des moyens de découpe connus comme une scie (notamment une scie cloche diamantée), une fraiseuse (notamment diamantée), un jet d'eau. Selon le moyen de découpe choisi, on peut découper une feuille de verre ou l'empilement des deux feuilles de verre appariées d'un ou des deux côtés dudit empilement.

Le refroidissement contrôlé général génère des contraintes de compression sur les bords externes des feuilles de verre, formant une ceinture périphérique de contraintes de compression. Elles sont généralement comprises entre 4 et 20 MPa. La ceinture de contraintes de compression de bords présente généralement une largeur sur chaque face principale du vitrage de 0,1 à 3 cm à compter du bord extérieur.

Le vitrage feuilleté selon l'invention peut être symétrique par rapport à un plan longitudinal médian passant par le milieu de sa bande transversale avant et le milieu de sa bande transversale arrière (le sens « longitudinal » correspondant au sens de déplacement du véhicule, le sens « transversal » lui étant perpendiculaire), notamment dans le cas d'un pare-brise ou d'une lunette arrière. Ce plan passe aussi par son barycentre.

Le refroidissement contrôlé (général et local) est exercé alors que les feuilles de verre appariées viennent d'être bombées à leur température de bombage. Tout le processus de refroidissement est généralement réalisé directement à partir de la température de bombage. En dehors des zones subissant le refroidissement local contrôlé, la température du verre baisse généralement de la température de bombage jusqu'à la température ambiante sans jamais remonter (baisse monotone de la température).
La découpe peut être réalisée sur la feuille de verre plane avant son bombage thermique, ou après le refroidissement sur la feuille de verre bombée. La découpe est faite soit avant le bombage alors que les feuilles sont planes et à température ambiante, soit après le bombage et le refroidissement. La découpe est généralement réalisée à température ambiante.

Si la découpe doit traverser les deux feuilles au même endroit, il n'est pas indispensable de déparier les feuilles pour cette découpe. On peut néanmoins déparier les feuilles et réaliser la découpe sur chacune d'elles indépendamment. Si l'une des feuilles doit être découpée à un endroit alors que l'autre ne doit pas être découpée au même endroit, on déparie les feuilles et l'on procède à la découpe sur la feuille devant être découpée. Chaque feuille peut devoir être découpée à un endroit différent du vitrage final, auquel cas on procède à un refroidissement contrôlé local pour chacun de ces endroits alors que les feuilles sont appariées, puis, après refroidissement, on déparie les feuilles pour les découper chacune individuellement à l'endroit souhaité si cela n'a pas été fait avant le bombage.

Selon une première variante on peut procéder comme suit :
- préparation de deux feuilles de verre planes ; à ce stade, leur bord externe a été découpé mais elles n'ont pas encore de zone évidée ; puis
- découpe pour former une zone évidée sur une seule feuille ou sur les deux feuilles, au même endroit (feuilles appariées ou non) ou à des endroits différents ; puis
- bombage thermique des feuilles appariées ; puis
- refroidissement contrôlé général et, à chaque endroit découpé, refroidissement contrôlé local ; puis
- assemblage du vitrage feuilleté, le conducteur électrique sortant par une zone évidée (voire deux zones évidées).

Selon une seconde variante on peut procéder comme suit :
- préparation de deux feuilles de verre planes ; à ce stade, leur bord externe a été découpé mais elles n'ont pas encore de partie évidée ; puis
- bombage thermique des feuilles appariées ; puis
- refroidissement contrôlé général et, à chaque endroit devant être découpé, refroidissement contrôlé local ; puis
- découpe à chaque endroit ayant subi le refroidissement contrôlé local, pour former une zone évidée sur une seule feuille ou sur les deux feuilles, au même endroit (feuilles appariées ou non) ou à des endroits différents ; puis
- assemblage du vitrage feuilleté, le conducteur électrique sortant par une zone évidée (voire deux zones évidées).

Quand on dit ci-dessus que les deux feuilles de verre ont été découpées « au même endroit », cela signifie que les zones évidées des deux feuilles sont en vis-à-vis dans l'assemblage feuilleté final.

Le matériau polymère jouant le rôle d'intercalaire entre les deux feuilles de verre peut être découpé à l'endroit correspondant à la zone évidée, avant assemblage du vitrage feuilleté, notamment si la zone évidée est de petite dimension, comme d'aire inférieure à 1 cm². Cependant, ceci n'est pas nécessaire si une seule feuille est découpée en un endroit alors que l'autre ne l'est pas au même endroit. Dans ce cas, il est même préférable de laisser l'intercalaire en place afin d'assurer une bonne résistance à l'impact au vitrage. Dans le cas où le conducteur électrique est à l'interface entre le verre non découpé et l'intercalaire en matériau polymère, on peut réaliser un orifice dans ledit intercalaire afin de faire passer le conducteur électrique par ledit orifice. Cet orifice devrait être juste assez grand pour laisser passer le conducteur électrique. Il a donc sensiblement la taille du conducteur électrique. Dans ce cas d'espèce, la zone évidée, notamment un orifice, est réalisée dans une première feuille de verre, aucune zone évidée n'étant réalisée dans la deuxième feuille de verre vis-à-vis de la zone évidée de la première feuille de verre (une fois le vitrage feuilleté assemblé), la couche intercalaire étant non-découpé vis-à-vis de la zone évidée de la première feuille de verre sauf selon un contour correspondant à celui du conducteur électrique passant à travers elle.

Le conducteur électrique peut être placé dans l'intercalaire ou collé sur l'intercalaire avant assemblage du vitrage feuilleté. Si le conducteur électrique est collé sur l'intercalaire, le matériau polymère va fluer lors de l'assemblage pour encapsuler au moins partiellement le conducteur électrique. Le conducteur électrique peut également être collé sur une feuille de verre avant assemblage du vitrage feuilleté. Dans ce cas, lors de l'assemblage, le matériau polymère va fluer pour encapsuler au moins partiellement le conducteur électrique.

Le vitrage électrique peut être muni de un à dix conducteurs électriques, voire plus. Les différents conducteurs électriques équipant le vitrage feuilleté peuvent être disposés parallèlement entre eux.

Le conducteur électrique peut par exemple être un câble fin individuel en métal conducteur, notamment en métal cuivreux. Il peut être nu ou entouré d'un isolant. Le conducteur électrique peut être une nappe contenant une pluralité de câbles électriques métalliques. Cette nappe peut être en un matériau polymère dans lequel sont noyés plusieurs câbles métalliques parallèles. La nappe est préparée avant d'être appliquée à l'intercalaire ou à l'une des feuilles de verre. Le conducteur électrique (câble nu, câble isolé, nappe, etc) peut avoir une épaisseur (perpendiculairement au vitrage) dans le domaine allant de 0,05 à 1 mm, notamment de 0,08 à 0,5 mm. Le conducteur électrique peut comprendre plusieurs câbles métalliques conducteurs, par exemple 2 ou 3 ou 4 ou 5 ou 6 câbles, voire plus.

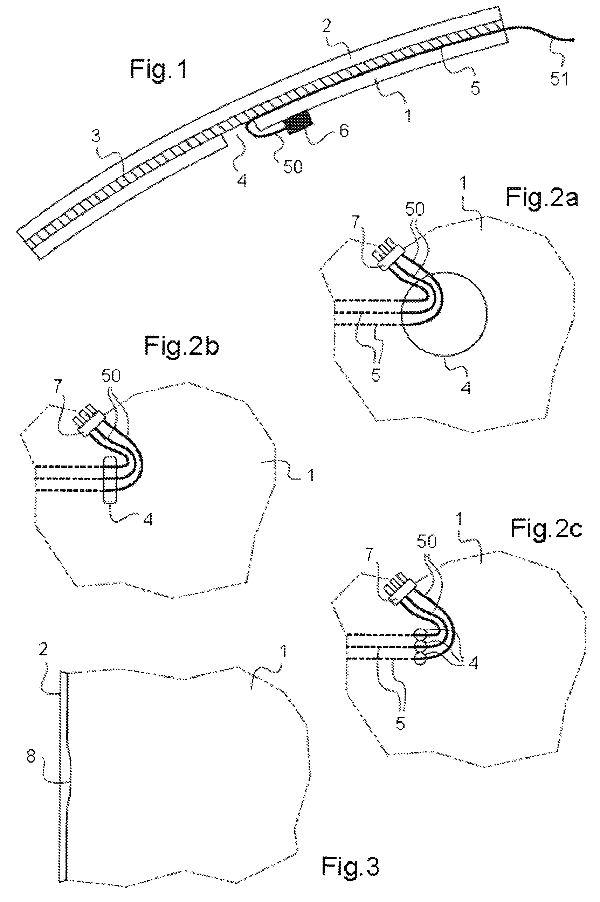

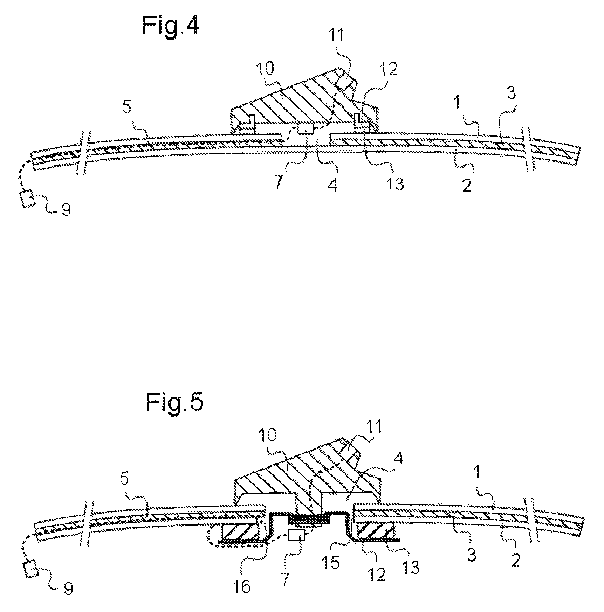

La figure 1 représente une vue en coupe d'un vitrage feuilleté pouvant être réalisé selon l'invention. Le vitrage feuilleté comprend une première feuille de verre 1, une deuxième feuille de verre 2 et un film intercalaire 3 en polymère thermoplastique, disposé entre les deux feuilles de verre. Le film intercalaire est par exemple un film de PVB, standard ou avec des propriétés d'amortissement acoustique. La première feuille de verre comprend un premier trou traversant 4. La première feuille de verre 1 peut aussi bien être positionnée du côté interne que du côté externe du véhicule, selon les applications. De plus, le film intercalaire peut comprendre un trou traversant coïncidant avec le premier trou traversant 4 de la première feuille de verre, comme représenté sur la figure 4.

Le vitrage feuilleté comprend également au moins un fil conducteur 5 (figure 1) qui est noyé dans le film intercalaire 3 ou qui est disposé entre le film intercalaire 3 et la première feuille de verre 1, ou encore qui est disposé entre le film intercalaire 3 et la deuxième feuille de verre 2. Cela lui procure une protection qui est intégrée au vitrage feuilleté. Lorsque le fil conducteur 5 est disposé entre le film intercalaire 3 et la deuxième feuille de verre 2, le film intercalaire 3 peut être muni d'un trou traversant qui coïncide avec le premier trou 4 de la première feuille de verre 1 pour permettre le passage du fil conducteur 5 à travers le film intercalaire 3 et à travers la première feuille de verre 1. Le fil conducteur 5 a une extrémité 50 qui est destinée à être connectée à un accessoire 6, par exemple un accessoire électrique, de préférence via un connecteur (7 sur les figures 2, 4 et 5). L'autre extrémité 51 du fil conducteur 5 est destinée à être connectée à une alimentation électrique et/ou un dispositif électrique sur le véhicule, de préférence via un connecteur (9 sur les figures 4 et 5). Une extrémité 50 du fil conducteur 5 sort du vitrage feuilleté par le premier trou traversant 4. Le premier trou traversant 4 est par exemple circulaire, pour une facilité de fabrication. Il doit être le plus petit possible pour permettre au vitrage feuilleté de respecter la norme R43 et suffisamment grand pour permettre le passage du fil conducteur, voire du connecteur, à travers lui. Ainsi, de préférence, le premier trou traversant 4 a un diamètre compris entre 3 et 80 mm.

Le connecteur 7, 9 permet de protéger l'extrémité du fil conducteur 5 lors du transport et de la manutention. Le connecteur 7, 9 est de préférence le plus compact possible tout en étant stable mécaniquement et en étant capable d'assurer une connexion électrique fiable dans un environnement véhicule, en particulier en résistant aux diverses agressions potentielles telles que vibrations, variations de températures importantes, atmosphère oxydante, etc.

De préférence, le ou les fils conducteurs 5 sont enrobés dans un film plastique formant une nappe mince et souple. Le film plastique peut être transparent (ce qui permet d'avoir un produit très discret), noir (ce qui évite d'ajouter de l'émail noir sur le verre pour masquer les fils conducteurs), ou encore de couleur (ce qui peut permettre d'améliorer l'aspect du produit fini, une fois intégré dans un vitrage). L'utilisation d'une telle nappe procure de plus une facilité de manutention lors de l'assemblage. La nappe est de préférence équipée de connecteurs à chacune de ses extrémités avant assemblage du vitrage. De plus, afin de faciliter le montage, la nappe peut être enduite de PVB ou d'un adhésif pour permettre son adhésion à la première feuille de verre. Enfin, La nappe doit de plus être suffisamment fine pour ne pas mettre en flexion permanente le verre lors de l'assemblage et pour ainsi éviter toute casse du verre au niveau du bord du ou des trous par lesquels sort la nappe. Pour pallier à cela, le verre a des contraintes de bord en périphérie des trous de sortie des extrémités des fils conducteurs.

L'accessoire 6 auquel est destiné à être connecté le ou les fils conducteurs 5 peut être fixé sur le vitrage feuilleté, comme représenté sur la figure 1, ou à proximité du vitrage feuilleté, par exemple sur un support de rétroviseur. L'accessoire 6 est par exemple un capteur de pluie ou d'humidité, un capteur de luminosité, une caméra, une antenne, un dispositif d'éclairage, un ventilateur ou encore un dispositif de positionnement par GPS. Le fil conducteur 5 permet l'alimentation électrique de l'accessoire 6 et/ou l'amenée d'informations émises par l'accessoire 6 vers le dispositif électrique du véhicule. Le fil conducteur 5 est par exemple en cuivre. En fonction des applications, par exemple pour la connexion à une caméra, le ou les fils conducteurs 5 peuvent être blindés.

En fonction du type d'accessoire, un ou plusieurs fils conducteurs 5 sont nécessaires. Dans le cas de plusieurs fils conducteurs 5, ils sont de préférence disposés les uns à côté des autres. Ils peuvent être reliés par un film transparent ou opaque sous forme d'une nappe. La première feuille de verre 1 peut comporter autant de trous traversant que de fils conducteurs et l'extrémité 50 de chaque fil conducteur 5 peut alors sortir du vitrage feuilleté par un premier trou traversant dédié de la première feuille de verre.

Les figures 2a, 2b, 2c sont une vue de détail, selon trois modes de réalisation respectifs, du vitrage feuilleté selon l'invention avec plusieurs fils conducteurs.

Sur la figure 2a, la première feuille de verre 1 comporte un unique premier trou traversant 4, de forme circulaire, par lequel sortent les extrémités 50 des fils conducteurs 5 destinées à être connectées à un accessoire.

Sur la figure 2b, la première feuille de verre 1 comporte un unique premier trou traversant 4, en forme de fente, par lequel sortent les extrémités 50 des fils conducteurs 5 destinées à être connectées à un accessoire.

Sur la figure 2c, la première feuille de verre 1 comporte trois premiers trous traversant 4, de forme circulaire, par chacun desquels sort l'extrémité 50 d'un fil conducteur 5 destinée à être connectée à un accessoire.

Les trous traversant circulaires peuvent être réalisés par une découpe à l'aide d'une scie cloche. Les trous traversant en forme de fente peuvent être réalisés par perçage au jet d'eau ou par usinage par une fraise diamantée.

L'extrémité 50 du ou des fils conducteurs 5 destinée à être connectée à l'accessoire 6 peut être insérée dans un connecteur 7, comme représenté sur les figures 2a à 2c, ce qui facilite la connexion à l'accessoire 6, en particulier lorsque celle-ci a lieu bien après la fabrication du vitrage feuilleté.

La figure 3 est une vue de détail du bord du vitrage feuilleté selon un mode de réalisation de l'invention.

La première feuille de verre 1 peut comprendre un deuxième trou traversant ou une encoche 8 en bord de vitrage, comme représenté sur la figure 3. Cette encoche 8 permet la sortie de l'autre extrémité 51 du fil conducteur 5 pour une connexion à une alimentation électrique et/ou un dispositif électrique sur le véhicule. Cette autre extrémité 51 peut être insérée dans un connecteur 9 (figures 4 et 5) pour une facilité de connexion ultérieure au véhicule. Le deuxième trou traversant de la première feuille de verre 1 peut être réalisé sur le bord de la première feuille de verre 1, par exemple en forme d'encoche 8, comme représenté sur la figure 3, ou à proximité du bord de la première feuille de verre 1.

Lorsque la première feuille de verre 1 ne comprend ni deuxième trou traversant ni encoche, l'extrémité 51 du fil conducteur 5 sort du vitrage feuilleté par la tranche du vitrage feuilleté, comme représenté sur la figure 1.

De façon optionnelle, le vitrage feuilleté comprend en outre au moins une bande d'émail opaque coïncidant avec le ou les fils conducteurs, cachant à la vue le ou les fils conducteurs depuis l'extérieur et/ou l'intérieur du véhicule. Toutefois, les fils conducteurs noyés dans le film intercalaire pouvant être très fins (quelques dizaines à quelques centaines de microns) et le conducteur ou la nappe contenant le conducteur ayant une largeur fine (quelques millimètres à une quinzaine de millimètres), la bande d'émail peut être bien plus fine que lorsqu'une goulotte est utilisée. La bande d'émail est par ailleurs beaucoup plus fine qu'une goulotte, ce qui permet d'améliorer nettement le champ de vision et le confort visuel.

Le vitrage feuilleté peut également comprendre un accessoire 6 fixé sur le vitrage feuilleté. L'accessoire 6 peut être fixé sur les bords du ou des premiers trous traversant 4 de la première feuille de verre 1, par exemple par encliquetage ou par collage, ou à proximité du ou des premiers trous traversant 4 de la première feuille de verre 1, par exemple par collage. En variante, l'accessoire peut également être logé à l'intérieur du trou traversant 4 de la première feuille de verre 1 et être fixé, par exemple par collage, sur la deuxième feuille de verre 2, en face 2 ou 3 du vitrage feuilleté suivant le positionnement des première et deuxième feuille de verre dans le vitrage feuilleté.

Par ailleurs, la deuxième feuille de verre peut également comprendre un trou traversant (15, figure 5). Dans ce dernier cas, le premier trou traversant 4 de la première feuille de verre 1 et le trou traversant 15 de la deuxième feuille de verre 2 ont de préférence sensiblement le même diamètre et se font face. Le film intercalaire est alors également muni d'un trou traversant qui coïncide avec les premiers trous 4, 15 des première et deuxième feuilles de verre 1, 2, comme représenté sur la figure 5.

Les figures 4 et 5 sont des vues en coupe, selon deux modes de réalisation respectifs, d'un vitrage feuilleté selon l'invention avec un accessoire d'antenne monté sur le vitrage. Ces figures sont des exemples de réalisation d'un vitrage feuilleté comprenant une antenne.

Un socle d'antenne 10 est fixé sur le vitrage feuilleté par des moyens de fixation 13, par exemple de la colle, via des moyens de support 12. Le socle d'antenne 11 comprend un connecteur 11 auquel est connecté le fil conducteur 5 via le connecteur 7.

Dans ces modes de réalisation, la première feuille de verre 1 est tournée vers l'extérieur du véhicule. L'étanchéité à l'eau est assurée par les moyens de fixation 13 qui entourent entièrement les trous traversants.

Dans le mode de réalisation de la figure 5, la deuxième feuille de verre comprend également un trou traversant 15. Sur la figure 5, le trou traversant 15 coïncide avec le premier trou traversant 4 et comporte en plus une encoche 16 pour faciliter le passage du fil conducteur 5.

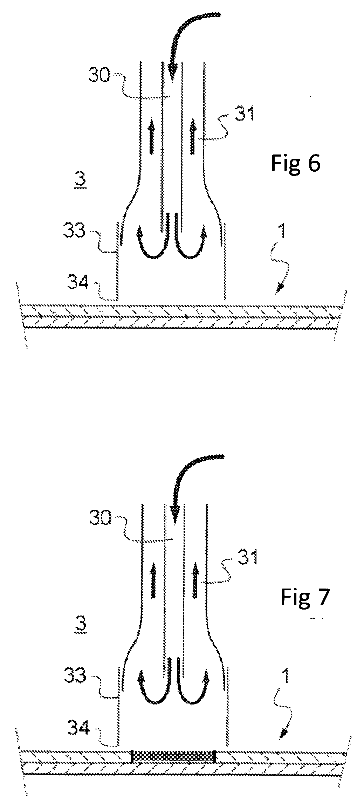

La figure 6 illustre un dispositif 3 schématique adapté pour souffler sur l'un des côtés des feuilles superposées. A ce stade, les feuilles ont déjà été bombées, l'orifice prévu dans l'une d'elles n'ayant pas encore été percé. Les feuilles sont représentées en cours de refroidissement suivant immédiatement l'opération de bombage. La buse 3 exerce un refroidissement contrôlé local au cours du refroidissement contrôlé général. Ici, on souffle de l'air à température ambiante sur une aire en forme de disque en vue de réaliser ultérieurement un évidement sur la feuille montrée en position supérieure. Le temps de soufflage est compris entre 40 et 90 secondes environ. La durée de soufflage est indépendante de la surface à refroidir de manière différenciée mais par contre dépend de l'épaisseur du verre. Les 40 secondes de refroidissement local sont établies pour des feuilles d'épaisseur chacune de 2,1 mm. La buse de soufflage a une terminaison de forme adaptée à la forme géométrique de la zone locale de contraintes en compression à obtenir. Elle peut notamment avoir la forme d'un contour carré ou rectangulaire. Sur la figure 6, la buse 3 comporte un conduit central d'alimentation en air 30, un conduit axisymétrique 31, autour du conduit central d'alimentation 30. Le conduit 31 débouche en terminaison de la buse sur une cloche cylindrique 33 dont la paroi est constituée d'un feutre souple à base de fibres métalliques. L'extrémité libre 34 de la cloche est posée contre la surface du verre. De l'air froid est amené via le conduit d'alimentation 30 jusqu'à la cloche 34 pour être libéré contre la surface du verre à refroidir puis s'évacuer via le conduit 31. Après le refroidissement, on déparie (on sépare) les deux feuilles. L'évidement est ensuite réalisé par découpe de l'un des feuilles de verre de façon connue de l'homme du métier. Ensuite, sont effectuées les étapes d'assemblage avec l'intercalaire, de dégazage de l'ensemble et de passage en autoclave, le conducteur métallique ayant été judicieusement placé entre les deux feuilles de verre. Ce traitement conduit à un collage entre l'intercalaire et les feuilles de verre de chaque côté de l'intercalaire.

La figure 7 illustre le même dispositif que celui de la figure 6, sauf que la feuille de verre en position supérieure a été préalablement percée individuellement alors qu'elle était plane et pas encore bombée. Les deux feuilles ont ensuite été appariées, puis bombées simultanément à l'état superposés. Lors du refroidissement suivant le bombage à la température de bombage, on a appliqué le refroidissement contrôlé local comme montré sur la figure 7 au cours du refroidissement contrôlé général appliqué à l'ensemble des feuilles. Le temps de soufflage est compris entre 10 et 90 secondes environ. On voit que la zone de soufflage appliquant le refroidissement contrôlé local est plus grande que l'orifice lui-même.

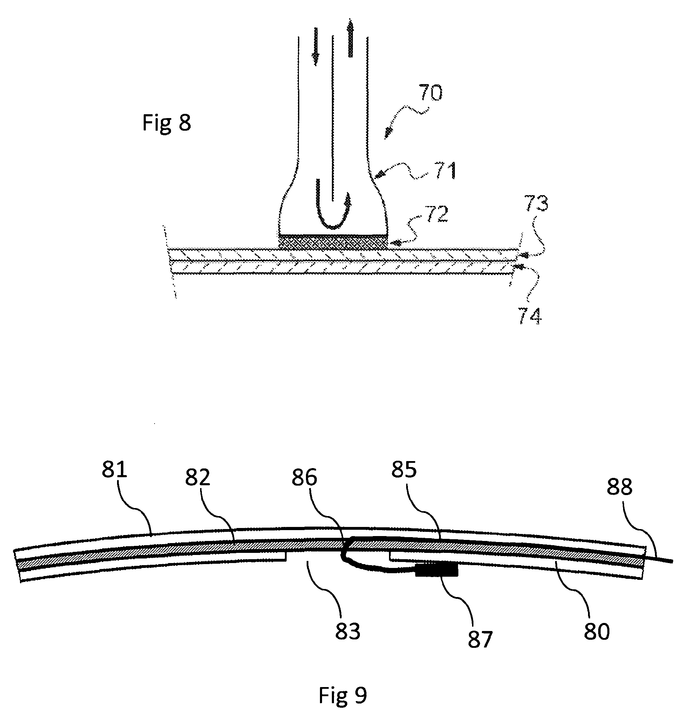

La figure 8 illustre un dispositif 70 schématique adapté pour refroidir par conduction une zone locale par une face principale d'un empilement de deux feuilles 73 et 74 superposées. A ce stade, les feuilles ont déjà été bombées, l'orifice prévu dans l'un d'eux n'ayant pas encore été percé. Les feuilles sont représentées en cours de refroidissement suivant immédiatement l'opération de bombage. Un refroidissement contrôlé local est exercé au cours du refroidissement contrôlé général. Un tuyau métallique 71, fermé au niveau de son extrémité inférieure, est parcouru par de l'air froid comme indiqué par les flèches. Le contact avec le verre entre le tuyau métallique et le verre est adouci grâce à un feutre 72 en fibres réfractaires pour réduire le risque de casse par choc thermique. On aboutit ainsi à la formation d'une zone locale de contraintes en compression à l'endroit du contact entre le feutre 72 et le verre. Après le refroidissement, on déparie (on sépare) les deux feuilles 73 et 74. L'évidement est ensuite réalisé par découpe de l'une des feuilles de façon connue de l'homme du métier. Ensuite, sont effectuées les étapes d'assemblage avec l'intercalaire, de dégazage de l'ensemble et de passage en autoclave, le conducteur métallique ayant été judicieusement placé entre les deux feuilles de verre. Ce traitement conduit à un collage entre l'intercalaire et les feuilles de verre de chaque côté de l'intercalaire.

La figure 9 illustre un vitrage feuilleté pouvant être réalisé selon l'invention. Le vitrage feuilleté comprend une première feuille de verre 80, une deuxière feuille de verre 81 et un film intercalaire 82 en polymère thermoplastique (PVB), disposé entre les deux feuilles de verre. La première feuille de verre 80 comprend un trou traversant 83, alors qu'au même endroit l'autre feuille de verre n'est pas percée. Le vitrage feuilleté comprend un fil conducteur 85 qui est disposé entre le film intercalaire 82 et la deuxième feuille de verre 81. Cela lui procure une protection intégrée au vitrage feuilleté. Le film intercalaire 82 est muni d'un orifice 86 traversant qui débouche dans l'intérieur du trou 83 de la première feuille de verre 80 pour permettre le passage du fil conducteur 85 à travers le film intercalaire 82 et à travers la première feuille de verre 80. Ainsi, cet orifice 86 a un contour correspondant à celui du fil conducteur. Le fil conducteur 85 a une extrémité destinée à être connectée à un accessoire 87, l'autre extrémité sortant du vitrage en bordure extérieure en 88. L'autre extrémité du fil conducteur 85 est destinée à être connectée à une alimentation électrique et/ou un dispositif électrique sur le véhicule, de préférence via un connecteur. Le trou traversant 83 est par exemple circulaire, pour une facilité de fabrication. Il doit être suffisamment petit pour permettre au vitrage feuilleté de respecter la norme R43 et suffisamment grand pour permettre le passage du fil conducteur, voire du connecteur, à travers. Ainsi, de préférence, le premier trou 83 a un diamètre compris entre 3 et 80 mm.

## Revendications

1. Procédé de fabrication d'un vitrage feuilleté bombé comprenant deux feuilles de verre, une couche intercalaire en matériau polymère agencée entre les feuilles de verre, et un conducteur électrique, ledit procédé comprenant le bombage thermique simultané des feuilles de verre à l'état apparié suivi de leur refroidissement puis de l'assemblage du vitrage feuilleté par collage des feuilles de verre à la couche intercalaire de part et d'autre de celle-ci, **caractérisé en ce que** ledit refroidissement comprend un refroidissement contrôlé des feuilles de verre à l'état apparié, le refroidissement contrôlé comprenant un refroidissement contrôlé général et un refroidissement contrôlé local d'une zone de découpe, le refroidissement contrôlé local étant plus rapide que le refroidissement contrôlé général, une découpe de l'une des feuilles de verre selon une ligne de découpe dans la zone de découpe pour former une zone évidée, le conducteur électrique étant placé entre les feuilles de verre et sortant du vitrage feuilleté par la zone évidée.

2. Procédé selon la revendication précédente, **caractérisé en ce que** la découpe est réalisée avant le bombage thermique.

3. Procédé selon la revendication 1, **caractérisé en ce que** la découpe est réalisée après le refroidissement.

4. Procédé selon l'une des revendications précédentes, **caractérisé en ce que** le refroidissement contrôlé local de la zone de découpe est suffisant en durée et en intensité pour que les contraintes de bord de la zone évidée après découpe soient supérieures à 4 MPa et de préférence supérieures à 8 MPa.

5. Procédé selon l'une des revendications précédentes, **caractérisé en ce que** le refroidissement contrôlé local est réalisé par soufflage local d'air plus froid que l'air ambiant entourant les feuilles de verre à l'état apparié.

6. Procédé selon l'une des revendications précédentes, **caractérisé en ce que** le refroidissement contrôlé général est réalisé à une vitesse comprise dans le domaine de 0,3 à 8°C/seconde entre 580 et 520°C.

7. Procédé selon l'une des revendications précédentes, **caractérisé en ce que** le conducteur électrique est une nappe contenant une pluralité de câbles électriques métalliques.

8. Procédé selon l'une des revendications précédentes, **caractérisé en ce que** le conducteur électrique a une épaisseur dans une direction perpendiculaire au vitrage comprise dans le domaine allant de 0,05 à 1 mm, notamment de 0,08 à 0,5 mm.

9. Procédé selon l'une des revendications précédentes, **caractérisé en ce que** la zone évidée forme un orifice.

10. Procédé selon l'une des revendications précédentes, **caractérisé en ce que** la zone évidée comprend une encoche dans le bord extérieur de la feuille de verre la comprenant.

11. Procédé selon la revendication précédente, **caractérisé en ce que** l'encoche a une profondeur d'au moins 0,5 cm vers l'intérieur de la feuille de verre la comprenant.

12. Procédé selon l'une des revendications précédentes, **caractérisé en ce que** la zone évidée, notamment un orifice, est réalisée dans une première feuille de verre, aucune zone évidée n'étant réalisée dans la deuxième feuille de verre vis-à-vis de la zone évidée de la première feuille de verre.

13. Procédé selon la revendication précédente **caractérisé en ce que** la couche intercalaire est non-découpée vis-à-vis de la zone évidée de la première feuille de verre sauf le cas échéant selon un contour correspondant à celui du conducteur électrique passant à travers elle.

## Patentansprüche

1. Verfahren zum Herstellen einer gebogenen Verbundverglasung, die zwei Glasscheiben, eine Zwischenschicht aus Polymermaterial, die zwischen den Glasscheiben angeordnet ist, und einen elektrischen Leiter umfasst, wobei das Verfahren das gleichzeitige thermische Biegen der Glasscheiben in paarig verbundenem Zustand gefolgt von deren Abkühlen und dann das Montieren der Verbundverglasung durch Verkleben der Glasscheiben mit der Zwischenschicht beiderseits von dieser umfasst, **dadurch gekennzeichnet, dass** das Abkühlen ein kontrolliertes Abkühlen der Glasscheiben in paarig verbundenem Zustand umfasst, wobei das kontrollierte Abkühlen ein kontrolliertes allgemeines Abkühlen und ein kontrolliertes lokales Abkühlen eines Schnittbereichs umfasst, wobei das kontrollierte lokale Abkühlen schneller ist als das kontrollierte allgemeine Abkühlen, ein Schneiden der einen der Glasscheiben entlang einer Schnittlinie in dem Schnittbereich, um einen ausgesparten Bereich zu bilden, wobei der elektrische Leiter zwischen den Glasscheiben platziert ist und aus der Verbundverglasung durch den ausgesparten Bereich austritt.

2. Verfahren nach dem vorhergehenden Anspruch, **dadurch gekennzeichnet, dass** das Schneiden vor dem thermischen Biegen erfolgt.

3. Verfahren nach Anspruch 1, **dadurch gekennzeichnet, dass** das Schneiden nach dem Abkühlen erfolgt.

4. Verfahren nach einem der vorhergehenden Ansprüche, **dadurch gekennzeichnet, dass** das kontrollierte lokale Abkühlen des Schnittbereichs von der Dauer und der Intensität her ausreicht, damit die Kantenspannungen des ausgesparten Bereichs nach dem Schneiden größer als 4 MPa und vorzugsweise größer als 8 MPa sind.

5. Verfahren nach einem der vorhergehenden Ansprüche, **dadurch gekennzeichnet, dass** das kontrollierte lokale Abkühlen durch lokales Einblasen von Luft erfolgt, die kälter ist als die Umgebungsluft, welche die Glasscheiben im paarig verbundenen Zustand umgibt.

6. Verfahren nach einem der vorhergehenden Ansprüche, **dadurch gekennzeichnet, dass** das kontrollierte allgemeine Abkühlen bei einer Geschwindigkeit erfolgt, die im Bereich von 0,3 bis 8 °C/Sekunde zwischen 580 und 520 °C liegt.

7. Verfahren nach einem der vorhergehenden Ansprüche, **dadurch gekennzeichnet, dass** der elektrische Leiter eine Matte ist, die eine Vielzahl von metallischen elektrischen Kabeln umfasst.

8. Verfahren nach einem der vorhergehenden Ansprüche, **dadurch gekennzeichnet, dass** der elektrische Leiter eine Dicke in einer zu der Verglasung senkrechten Richtung hat, die im Bereich von 0,05 bis 1 mm, insbesondere von 0,08 bis 0,5 mm liegt.

9. Verfahren nach einem der vorhergehenden Ansprüche, **dadurch gekennzeichnet, dass** der ausgesparte Bereich eine Öffnung bildet.

10. Verfahren nach einem der vorhergehenden Ansprüche, **dadurch gekennzeichnet, dass** der ausgesparte Bereich eine Einkerbung in der Außenkante der Glasscheibe, die ihn umfasst, aufweist.

11. Verfahren nach dem vorhergehenden Anspruch, **dadurch gekennzeichnet, dass** die Einkerbung eine Tiefe von mindestens 0,5 cm zu dem Inneren der Glasscheibe, die sie umfasst, hin hat.

12. Verfahren nach einem der vorhergehenden Ansprüche, **dadurch gekennzeichnet, dass** der ausgesparte Bereich, insbesondere die Öffnung, in einer ersten Glasscheibe realisiert ist, wobei kein ausgesparter Bereich in der zweiten Glasscheibe dem ausgesparten Bereich der ersten Glasscheibe gegenüber realisiert ist.

13. Verfahren nach dem vorhergehenden Anspruch, **dadurch gekennzeichnet, dass** die Zwischenschicht dem ausgesparten Bereich der ersten Glasscheibe gegenüber nicht geschnitten ist, es sei denn gegebenenfalls entlang einer Kontur, die der des elektrischen Leiters, der sie durchquert, entspricht.

## Claims

1. A method for manufacturing dished laminated glazing comprising two sheets of glass, a separator layer made of polymer material arranged between the sheets of glass, and an electrical conductor, said method comprising the simultaneous thermal dishing of the sheets of glass in the paired state followed by their cooling and then the assembly of the laminated glazing by bonding of the sheets of glass to the separator layer on either side thereof, **characterized in that** said cooling comprises a controlled cooling of the sheets of glass in the paired state, the controlled cooling comprising a general controlled cooling and a local controlled cooling of a cutting zone, the local controlled cooling being faster than the general controlled cooling, a cutting of one of the sheets of glass along a cutting line in the cutting zone to form a holed zone, the electrical conductor being placed between the sheets of glass and exiting from the laminated glazing through the holed zone.

2. The method as claimed in the preceding claim, **characterized in that** the cutting is performed before the thermal dishing.

3. The method as claimed in claim 1, **characterized in that** the cutting is performed after the cooling.

4. The method as claimed in one of the preceding claims, **characterized in that** the local controlled cooling of the cutting zone is sufficient in duration and in intensity for the edge stresses of the holed zone after cutting to be greater than 4 MPa and preferably greater than 8 MPa.

5. The method as claimed in one of the preceding claims, **characterized in that** the local controlled cooling is performed by the local blowing of air that is cooler than the ambient air surrounding the sheets of glass in the paired state.

6. The method as claimed in one of the preceding claims, **characterized in that** the general controlled cooling is performed at a speed contained in the range from 0.3 to 8°C/second between 580 and 520°C.

7. The method as claimed in one of the preceding claims, **characterized in that** the electrical conductor is a ribbon cable containing a plurality of metallic electrical cables.

8. The method as claimed in one of the preceding claims, **characterized in that** the electrical conductor has a thickness in a direction at right angles to the glazing lying within the range ranging from 0.05 to 1 mm, notably from 0.08 to 0.5 mm.

9. The method as claimed in one of the preceding claims, **characterized in that** the holed zone forms an orifice.

10. The method as claimed in one of the preceding claims, **characterized in that** the holed zone comprises a notch in the outer edge of the sheet of glass that includes it.

11. The method as claimed in the preceding claim, **characterized in that** the notch has a depth of at least 0.5 cm toward the interior of the sheet of glass that includes it.

12. The method as claimed in one of the preceding claims, **characterized in that** the holed zone, notably an orifice, is produced in a first sheet of glass, no holed zone being produced in the second sheet of glass facing the holed zone of the first sheet of glass.

13. The method as claimed in the preceding claim, **characterized in that** the separator layer is not cut facing the holed zone of the first sheet of glass except, if necessary, according to an outline corresponding to that of the electrical conductor passing through it.
